# EUROPÄISCHE PATENTSCHRIFT

(11) **EP 0 598 270 B1**
(45) Veröffentlichungstag und Bekanntmachung des Hinweises auf die Patenterteilung: **18.09.1996**
(21) Anmeldenummer: 93117667.1
(22) Anmeldetag: 02.11.1993
(51) Int. Cl.: F16M 11/12, F16M 11/18

(54) **Schwenk-Neigekopf für optische Geräte**
Panning and tilting head for optical apparatus
Tête de support orientable et inclinable pour appareils optiques

(30) Priorität: 19.11.1992 DE 4238900
(43) Veröffentlichungstag der Anmeldung: 25.05.1994
(73) Patentinhaber: VIDEOR TECHNICAL E. HARTIG GmbH, D-63322 Rödermark (DE)
(72) Erfinder: Bernhardt, Rainer, D-61191 Rosbach 1 (DE)
(74) Vertreter: Zapfe, Hans, Dipl.-Ing.

(56) Entgegenhaltungen:
- EP-A- 0 257 988
- DE-A- 1 537 403
- DE-C- 3 811 523
- US-A- 3 164 838
- JAI Special Video Products Division, Prospekt 'Restlicht-TV-Kameras, Hochgeschwindigkeits-TV-Kameras, CCD-TV-Kameras, Spezialüberwachungssysteme, Überwachung bei Proze steuerungen', Mainz

## Beschreibung

Die Erfindung betrifft einen Schwenk-Neigekopf für optische Geräte, insbesondere für Überwachungskameras, mit einem Gehäuse mit einem Montagesockel für das Gehäuse, mit Stellgliedern für das Schwenken der Geräte um eine erste, senkrechte Schwenkachse AS-AS, die das Gehäuse und den Montagesockel miteinander verbindet, und für das Neigen um eine zweite, waagrechte Neigeachse AN-AN, die das Gehäuse mit einem Träger für die Geräte verbindet, wobei das Gehäuse einen rohrförmigen Strangprofilabschnitt besitzt, der an beiden Enden durch je einen Deckel verschlossen ist.

Derartige Schwenk-Neigeköpfe werden vornehmlich auf dem Gebiet der Video-Überwachung von Gebäuden und Anlagen mittels in sich geschlossener Video-Systeme verwendet. Die hier zur Diskussion stehenden optischen Geräte sind aber nicht nur Video-Kameras, sondern auch Scheinwerfer, Zieleinrichtungen etc.

Nun haben sowohl die Video-Kameras, bedingt durch ihre lichtstarken Zoomobjektive mit einem großen Zoombereich, als auch Scheinwerfer oder Scheinwerfer-Batterien ein beträchtliches Gewicht, wobei der Massenschwerpunkt in der Regel auch noch einen beträchtlichen Abstand von jeder der beiden Schwenkachsen hat. Will man die Zahl der optischen Geräte erhöhen, so ergibt sich eine weitere Verschlechterung der mechanischen Verhältnisse, wobei zu berücksichtigen ist, daß der schwenkbare Träger für die optischen Geräte eine fliegende Lagerung darstellt.

Durch die DE-C-38 11 523 ist ein in zwei Gießformen gegossenes Gehäuse für Schwenk-Neigeköpfe bekannt, das aus einem Gehäuseunterteil und einem Gehäuseoberteil besteht, die über eine schräge Trennfuge miteinander verbunden sind. Das Gehäuse ist wiederum drehbar mit einem plattenförmigen Montagesockel verbunden, der seinerseits auf einer Konsole oder an einer Gebäudedecke befestigt werden kann. Derartige, aus Metall bestehende Gehäuse sind extrem teuer in der Herstellung, da sie in unterschiedlichen Größen und Ausstattungen benötigt werden, wobei für jede Gehäusegröße mehrere Gießformen, Kokillen oder dergleichen vorrätig gehalten werden müssen. Wird hierbei an der Gießform gespart, so steigt der Umfang der Nachbearbeitungen, zu denen auch ein Spachteln und Lackieren gehört. Der runde Innenquerschnitt des Gehäuseunterteils beschränkt die Einbaumöglichkeiten, insbesondere den Einbau rechteckiger Platinen und anderer Bauelemente mit quadratischem oder rechteckigem Grundriß. Es ist durch einen Prospekt der Fa. JAI Special Video Products Division in Mainz auch bereits bekannt, bei einem Schwenk-Neigekopf Gehäuse und Montagesockel aus je einem rohrförmigen Strangprofilabschnitt herzustellen, der an beiden Enden durch einen ebenen Deckel verschlossen ist. Die miteinander fluchtenden Achsen der Strangprofilabschnitte von Gehäuse und Montagesockel stehen hierbei senkrecht, so daß ein turmartiger Aufbau gebildet wird. Der Antriebsmotor für die Schwenkbewegung ist im Montagesockel, der Antriebsmotor für die Neigebewegung im Gehäuse angeordnet. Dadurch erhält der Montagesockel eine erhebliche Bauhöhe, und die beengten Verhältnisse innerhalb der Strangprofilabschnitte machen den Einbau der mechanischen, elektrischen und elektronischen Teile schwierig. Durch die getrennte Unterbringung der Antriebsmotoren und Untersetzungsgetriebe wird zudem in erheblichem Maße Raum verschwendet. Man hat dieses Konstruktionsprinzip daher bisher nur am untersten Ende des Bereichs möglicher Abmessungen verwendet.

Der Erfindung liegt daher die Aufgabe zugrunde, einen Schwenk-Neigekopf der eingangs und vorstehend beschriebenen Gattung anzugeben, dessen Bauprinzip auch für schwere Ausführungen geeignet ist und einen einfachen und platzsparenden Einbau der Stellglieder und zugehöriger elektrischer und elektronischer Bauteile ermöglicht. Zudem soll das Bauprinzip eine erhebliche Variationsbreite unterschiedlicher Gehäuseabmessungen ermöglichen, ohne daß dafür eine große Zahl von Strangprofilquerschnitten vorrätig gehalten werden müßte.

Unter dem Begriff "Stellglieder" werden dabei alle mechanischen und elektrischen Verstelleinrichtungen verstanden, durch die es möglich ist, gezielte Stellbefehle auf die optischen Geräte zu übertragen. Derartige Stellglieder können beispielsweise aus elektrischen Kleinmotoren mit entsprechenden Untersetzungsgetrieben bestehen, die als Stirnradgetriebe oder Schneckengetriebe ausgeführt sein können, damit beispielsweise auch eine Selbsthemmung gewährleistet ist. Es ist beispielsweise aber auch möglich, als Stellglieder sogenannte Vielpol-Motoren vorzusehen oder Schrittschaltwerke bis hin zum Ultraschall-Antrieb. Den Stellgliedern können dabei auch Stellungsmelder zugeordnet werden, so daß das Erreichen einer Einstellposition kontrolliert werden kann.

Zur Lösung der gestellten Aufgabe sind derartige Schwenk-Neigeköpfe erfindungsgemäß dadurch gekennzeichnet, daß
a) der Strangprofilabschnitt mit waagrechter Profillängsachse AP-AP montiert ist, senkrecht stehende Stirnflächen und einen waagrechten und mindestens einen senkrechten Profilschenkel aufweist, die auf dem Umfang durch weitere Wandungsteile des Strangprofilabschnitts zu einem rohrförmigen Hohlkörper ergänzt sind,
b) die senkrechte Schwenkachse AS-AS den waagrechten Profilschenkel durchdringt und an diesem abgestützt ist,
c) die waagrechte Neigeachse AN-AN den senkrechten Profilschenkel durchdringt und an diesem abgestützt ist, und daß
d) die beiden Deckel mit senkrechten Dichtflächen auf den Stirnflächen des Strangprofilabschnitts befestigt sind und die Stellglieder zwischen sich und dem Strangprofilabschnitt einschließen.

Ein derartiger Strangprofilabschnitt läßt sich in unterschiedlichen Längen von einem entsprechenden Strangprofil abschneiden, wodurch eine erste Variationsmöglichkeit hinsichtlich der Gehäusebreite gebildet wird. Der Strangprofilabschnitt läßt sich hinsichtlich seiner Oberfläche kostengünstig veredeln, z.B. eloxieren oder mit Kunststoff beschichten, ohne daß hierfür aufwendige Beschichtungsmaßnahmen erforderlich sind. Insbesondere läßt sich auf diese Weise das bei Gußteilen häufig erforderliche Spachteln vermeiden. Der bei Montagebeginn an beiden Seiten offene Strangprofilabschnitt, der vorzugsweise die Struktur einen flachen Rahmens besitzt, ermöglicht eine nahezu uneingeschränkte Zugänglichkeit von beiden Seiten her, so daß der Einbau der Stellglieder und zugehöriger elektrischer und elektronischer Bauteile erleichtert wird. Durch die Unterbringung der Stellglieder für beide Antriebsachsen läßt sich darüberhinaus ein sehr platzsparender Einbau durchführen, so daß ohne Inkaufnahme größerer Gehäuseabmessungen stärkere Stellglieder bzw. Antriebsmotoren verwendet werden können. Außer aus einer Leichtmetall-Legierung können die Strangprofile auch aus einem extrudierfähigen Kunststoff oder einer Kunststoff-Mischung mit und ohne Faserverstärkung bestehen.

Eine zweite und wesentlich interessantere Variationsmöglichkeit hinsichtlich der Gehäuseabmessungen ist durch die Variationsbreite der geometrischen Form der beiden Gehäusedeckel gegeben. Diese können - bei entsprechender Länge des Strangprofilabschnitts - als ebene, von planparallelen Flächen begrenzte Platten ausgebildet sein, die auf die senkrechten Stirn- bzw. Dichtflächen des Strangprofilabschnitts aufgeschraubt werden.

Mit besonderem Vorteil können die beiden Gehäusedeckel aber auch kastenförmig und/oder bombiert ausgebildet sein, so daß der Strangprofilabschnitt selbst entsprechend kurz gehalten werden kann, was die Montage der Einbauteile ungemein erleichtert. Die Gehäusedeckel haben durch ihre Raumform eine große Gestaltfestigkeit, die sich mit der Gestaltfestigkeit des Strangprofilabschnitts zu einem äußerst verwindungssteifen Gehäuse ergänzt.

Matrizen für das Strangpressen von Profilen verursachen nur einen Bruchteil der Kosten von beispielsweise Druckgußformen. Auch Spritzformen für die vorzugsweise aus einem faserverstärktem Kunststoff bestehenden Gehäusedeckel sind verhältnismäßig preiswert herzustellen. Es können aber auch Deckel verwendet werden, die aus ebenem oder tiefgezogenem Blech oder Kunststoff bestehen.

Es ist dabei besonders vorteilhaft, wenn der senkrechte Profilschenkel des Strangprofilabschnitts das erste Lager für die Neigeachse AN-AN und mit einem Zwischenraum eine Platine trägt, in der sich das zweite Lager für die Neigeachse AN-AN befindet und auf deren dem Profilschenkel abgekehrten Seite ein Antriebsmotor für die Neigebewegung befestigt ist, wobei in dem Zwischenraum Getriebeteile eines Untersetzungsgetriebes für die Neigeachse AN-AN angeordnet sind.

Es ist darüberhinaus weiterhin von Vorteil, wenn der waagrechte Profilschenkel das erste Lager für die Schwenkachse AS-AS und mit einem Zwischenraum eine Platine trägt, in der sich das zweite Lager für die Schwenkachse AS-AS befindet und auf deren dem Profilschenkel abgekehrten Seite ein Antriebsmotor für die Schwenkbewegung befestigt ist, wobei in dem Zwischenraum Getriebeteile eines Untersetzungsgetriebes für die Schwenkachse AS-AS angeordnet sind.

Die Profilschenkel dienen hierbei gewissermaßen als zweite Platine für die Lagerung der Getriebeteile.

Weitere vorteilhafte Ausgestaltungen des Erfindungsgegenstandes ergeben sich aus den übrigen Unteransprüchen.

Zwei Ausführungsbeispiele des Erfindungsgegenstandes werden nachstehend anhand der Figuren 1 bis 4 näher erläutert.

Es zeigen:
- Figur 1: einen Seitenansicht eines Schwenk-Neigekopfes mit abgenommenen Deckeln,
- Figur 2: eine Seitenansicht gemäß Figur 1, jedoch mit aufgesetzten Deckeln, d.h. in geschlossenem und betriebsbereitem Zustand,
- Figur 3: eine rückseitige Ansicht des Gegenstandes nach Figur 2 in Richtung des Pfeils III in Figur 2, und
- Figur 4: eine Variante des Gegenstandes nach Figur 2 in vergleichbarer Darstellung.

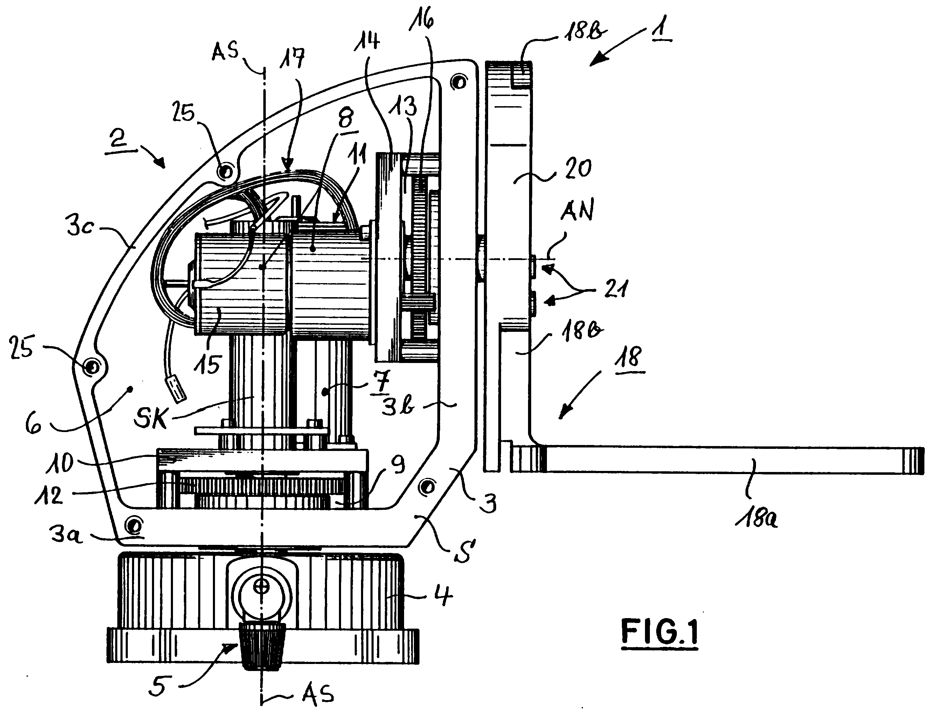

In Figur 1 ist ein Schwenk-Neigekopf 1 dargestellt, dessen zentrales Teil ein Gehäuse 2 ist, von dem hier nur der Strangprofilabschnitt 3 gezeigt ist, der gewissermaßen die Zarge des Gehäuses 2 bildet.

Das Gehäuse 2 ist auf einem Montagesockel 4 angeordnet und auf diesem um eine senkrechte Schwenkachse AS-AS schwenkbar. Der Montagesockel besitzt eine seitlich angebrachte Steckverbindung 5 für ein vieladriges Anschlußkabel, das im Innern der hohl ausgebildeten Schwenkachse AS-AS geführt ist, die hier nur symbolisch durch eine strichpunktierte Linie angedeutet ist. Die Steckverbindung kann auch in einem hier nicht gezeigten Ausschnitt des Montagesockels 4 untergebracht sein. Der Schwenkachse AS-AS wird vorzugsweise ein in einem Zylinder gekapseltes System (SK) von koaxialen Schleifringen mit Schleifkontakten zugeordnet, so daß der Schwenk-Neige-Kopf eine unbegrenzte Zahl von Umdrehungen ausführen kann.

Der Strangprofilabschnitt 3 besitzt eine Profillängsachse AP-AP, die in Figur 1 senkrecht zur Zeichenebene verläuft, sowie zwei senkrecht stehende Stirnflächen S, von denen in Figur 1 nur die vordere sichtbar ist. Diese Stirnflächen S verlaufen parallel zur Schwenkachse AS-AS. Ferner besitzt der Strangprofilabschnitt 3 einen waagrechten Profilschenkel 3a und einen senkrechten Profilschenkel 3b, die auf dem Umfang des Strangprofilabschnitts 3 durch weitere Wandungsteile 3c des Strangprofilabschnitts zu einem rohrförmigen Hohlkörper ergänzt sind. Der dadurch gebildete Hohlraum 6 dient zumindest im wesentlichen zur Aufnahme der nachstehend noch näher beschriebenen Stellglieder 7 und 8.

Wie aus Figur 1 ersichtlich ist, durchdringt die senkrechte Schwenkachse AS-AS den waagrechten Profilschenkel 3a etwa mittig und stützt sich an diesem durch ein hier nicht näher dargestelltes Lager ab. Andererseits durchdringt die hierzu senkrecht stehende waagrechte Neigeachse AN-AN den senkrechten Profilschenkel 3b und stützt sich an diesem durch ein weiteres, hier nicht näher dargestelltes Lager ab.

Der waagrechte Profilschenkel 3a trägt mithin nicht nur das Lager für die Schwenkachse AS-AS, sondern auch mit einem Zwischenraum 9 eine Platine 10, auf deren dem Profilschenkel 3a abgekehrten Seite ein elektrischer Antriebsmotor 11 für die Schwenkbewegung befestigt ist. In dem Zwischenraum 9 befinden sich Getriebeteile eines Untersetzungsgetriebes 12 für die Schwenkachse AS-AS. Besonders bezeichnet ist hier nur das große Stirnrad dieses Untersetzungsgetriebes.

In analoger Weise trägt der senkrechte Profilschenkel 3b das gleichfalls nicht gezeigte Lager für die Neigeachse AN-AN und mit einem Zwischenraum 13 eine Platine 14, auf deren dem Profilschenkel 3b abgekehrten Seite ein Antriebsmotor 15 für die Neigebewegung befestigt ist. Auch in dem Zwischenraum 13 befinden sich Getriebeteile eines Untersetzungsgetriebes 16, von dem hier außer dem großen Stirnrad auch das nicht näher bezifferte Ritzel gezeigt ist. In dem Hohlraum 6 befindet sich noch ein Kabelstrang 17, der mit der Steckverbindung 5 über das besagte System SK aus Schleifringen und Schleifkontakten verbunden ist.

In den Platinen 10 und 14 sind jeweils zweite Lager für die Schwenk- bzw. Neigeachse angeordnet, damit diese Achsen eine definierte Zweipunktlagerung aufweisen.

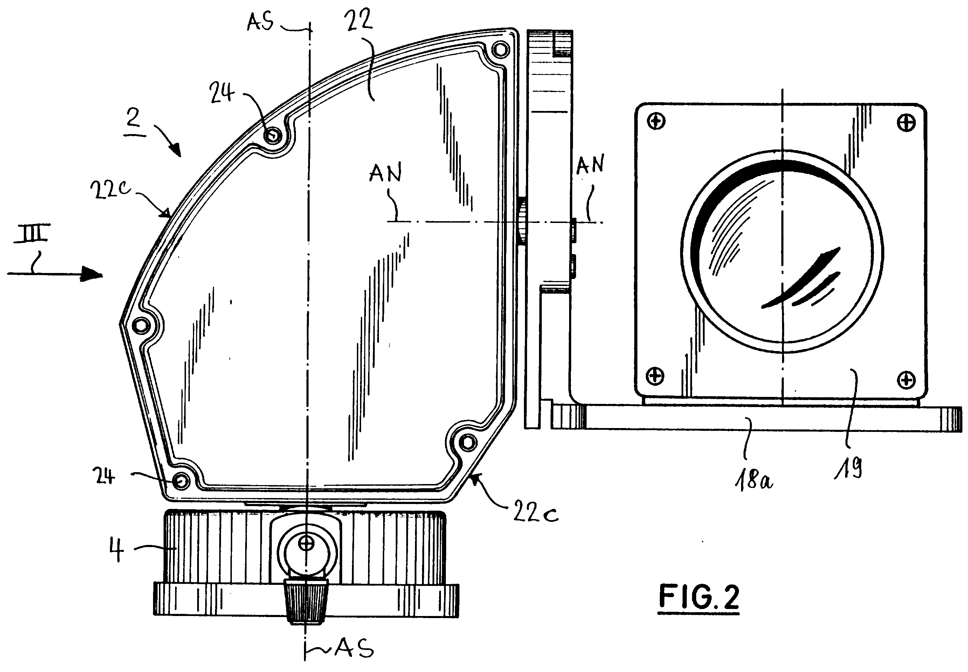

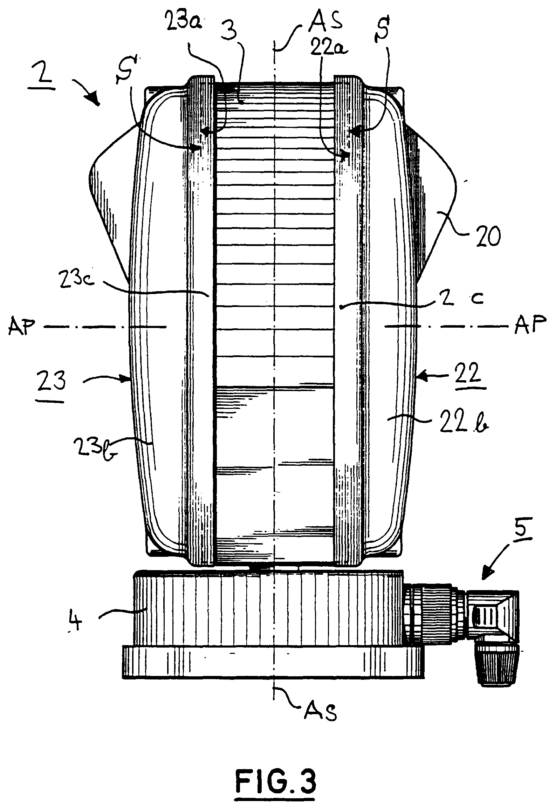

Die Neigeachse AN-AN ist an ihrem Ende mit einem Träger 18 versehen, der zwei rechtwinklig zueinander stehende Schenkel 18a und 18b besitzt. Der Schenkel 18a dient zur Aufnahme eines optischen Geräts 19, das in Figur 2 als Video-Kamera dargestellt ist. Der in dieser Position senkrecht stehende Schenkel 18b ist in Bezug auf die Neigeachse AN-AN radial verstellbar in einem Führungskörper 20 gelagert, der seinerseits verdrehfest auf der Neigeachse AN-AN befestigt ist. Die radiale Fixierung des Trägers 18 gegenüber dem Führungskörper 20 erfolgt durch Schrauben 21. Wie aus Figur 3 hervorgeht, besitzt der Führungskörper 20 den Umriß eines Tortenstücks und wirkt mit seinem breiteren Ende als Gegengewicht.

Die Figuren 2 und 3 zeigen das Gehäuse 2 bzw. den Strangprofilabschnitt 3 durch zwei spiegelsymmetrisch ausgebildete Deckel 22 und 23 verschlossen. Jeder dieser Deckel besitzt eine hier nur gestrichelt dargestellte Dichtfläche 22a bzw. 23a, die unter Zwischenschaltung einer hier nicht näher gezeigten Profildichtung auf den Stirnflächen S des Strangprofilabschnitts 3 befestigt sind.

Wie aus Figur 3 hervorgeht, besitzen die beiderseitigen Deckel 22 und 23 je eine Deckelwand 22b und 23b, die in Richtung der Profillängsachse AP-AP über die Dichtflächen 22a bzw. 23a des Deckels vorstehen. Wie gezeigt, ist jede Deckelwand 22b und 23b deutlich bombiert. Dadurch wird zusätzlicher Raum für die Unterbringung seitlich ausladender Stellglieder und Getriebeteile geschaffen, ohne daß die axiale Länge des Strangprofilabschnitts 3 vergrößert werden müßte, was deutlich aus Figur 3 hervorgeht.

Jeder dieser Deckel weist einen von seiner Dichtfläche 22a bzw. 23a abgesetzten Rand 22c bzw. 23c auf, der den Strangprofilabschnitt 3 und eine gegebenenfalls zwischengelegte Dichtung teilweise übergreift. Dies hat den Vorteil, daß die betreffende Dichtung keinen Witterungseinflüssen, insbesondere nicht der schädlichen UV-Strahlung des Sonnenlichts ausgesetzt ist. Dadurch wird die Langzeitwirkung der Dichtung erheblich verbessert. Die Deckel 22 und 23 sind - wie einseitig in Figur 2 darstellt - mit dem Strangprofilabschnitt 3 verschraubt, und zwar durch Schrauben 24, die in entsprechende Gewindelöcher 25 im Strangprofilabschnitt 3 eingreifen.

Aus Figur 1 geht deutlich hervor, daß sich die beiden Antriebsmotoren 11 und 15 mit ihren nicht näher bezeichneten, unmittelbar angesetzten Getrieben in Tiefenrichtung hintereinander befinden, so daß sich deren Achsen gewissermaßen im Hohlraum 6 in gestaffelter Anordnung kreuzen. Daraus ergibt sich die Möglichkeit eines außerordentlich kompakten Aufbaus und einer Abschrägung der Wandungsteile 3c des Strangprofilabschnitts 3.

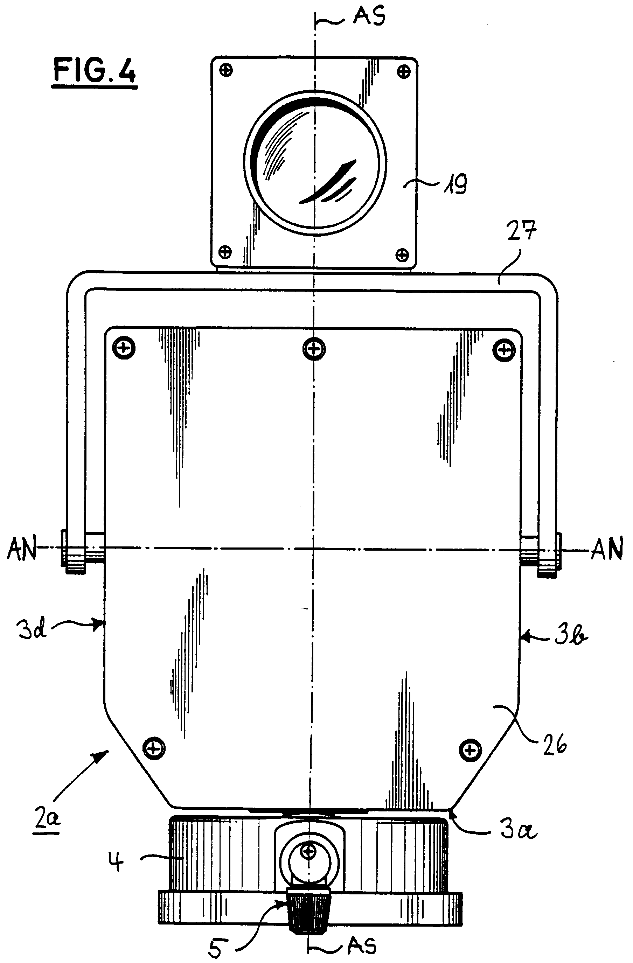

Figur 4 zeigt eine Variante des Gegenstandes nach Figur 2: Das Gehäuse 2a ist in diesem Falle in der Draufsicht spiegelsymmetrisch zur Schwenkachse AS-AS ausgebildet und besitzt - in der Draufsicht nicht sichtbar - außer dem waagrechten Profilschenkel 3a zwei senkrechte Profilschenkel 3b und 3d. Durch eine derartige Ausbildung des Gehäuses 2a ist es zunächst möglich, für jede Gehäusegröße nur eine einzige Form eines Deckels 26 vorrätig zu halten, von der alsdann zwei Deckel beidseitig auf den Strangprofilabschnitt aufgesetzt werden können. Hierdurch werden die Werkzeugkosten spürbar verringert. In diesem Fall sind die beiden senkrechten Profilschenkel 3b und 3d von der Neigeachse AN-AN durchdrungen, auf deren äußeren Enden ein U-förmiger Träger 27 für das optische Gerät 19 angeordnet ist.

Es versteht sich, daß das Gehäuse 2a nach Figur 4 auch in Verbindung mit einem einseitig angesetzten winkelförmigen Träger 18 nach Figur 1 verwendet werden kann. Auch in diesem Fall bleibt der Vorteil erhalten, daß nur eine einzige Dekkelform für jeden Strangprofilabschnitt 3 vorrätig gehalten werden muß.

## Patentansprüche

1. Schwenk-Neigekopf (1) für optische Geräte (19), insbesondere für Überwachungskameras, mit einem Gehäuse (2, 2a) mit einem auf einer waagrechten Ebene befestigbaren Montagesockel (4) für das Gehäuse, mit Stellgliedern (7, 8) für das Schwenken der Geräte um eine erste, senkrechte Schwenkachse (AS-AS), die das Gehäuse und den Montagesockel miteinander verbindet, und für das Neigen um eine zweite, waagrechte Neigeachse (AN-AN), die das Gehäuse mit einem Träger (18, 27) verbindet, wobei das Gehäuse einen rohrförmigen Strangprofilabschnitt (3) besitzt, der an beiden Enden durch je einen Deckel (22,23, 26) verschlossen ist, **dadurch gekennzeichnet**, daß
a) der Strangprofilabschnitt (3) mit waagrechter Profillängsachse (AP-AP) montiert ist, senkrecht stehende Stirnflächen (S) und einen waagrechten (3a) und mindestens einen senkrechten Profilschenkel (3b, 3d) aufweist, die auf dem Umfang durch weitere Wandungsteile (3c) des Strangprofilabschnitts zu einem rohrförmigen Hohlkörper ergänzt sind,
b) die senkrechte Schwenkachse (AS-AS) den waagrechten Profilschenkel (3a) durchdringt und an diesem abgestützt ist,
c) die waagrechte Neigeachse (AN-AN) den senkrechten Profilschenkel (3b) durchdringt, und an diesem abgestützt ist, und daß
d) die beiden Deckel (22, 23, 26) mit senkrechten Dichtflächen (22a, 23a) auf den Stirnflächen (3) des Strangprofilabschnitts (3) befestigt sind und die Stellglieder (7, 8) zwischen sich und dem Strangprofilabschnitt (3) einschließen.

2. Schwenk-Neigekopf nach Anspruch 1, **dadurch gekennzeichnet,** daß der Strangprofilabschnitt (3) aus einer Leichtmetall-Legierung besteht.

3. Schwenk-Neigekopf nach Anspruch 1, **dadurch gekennzeichnet,** daß der Deckel (22, 23) aus einem Kunststoff besteht, vorzugsweise aus einem faserverstärkten, gespritzen Kunststoff.

4. Schwenk-Neigekopf nach Anspruch 1, **dadurch gekennzeichnet,** daß mindestens einer der beiderseitigen Deckel (22, 23) eine Deckelwand (22b, 23b) aufweist, die in Richtung der Profillängsachse (AP-AP) über die Dichtfläche (22a, 23a) des Deckels vorsteht.

5. Schwenk-Neigekopf nach Anspruch 4, **dadurch gekennzeichnet,** daß die Deckelwand (22b, 23b) bombiert ist.

6. Schwenk-Neigekopf nach Anspruch 3, **dadurch gekennzeichnet,** daß der Deckel (22, 23) einen von seiner Dichtfläche (22a, 23a) abgesetzten Rand (22c, 23c) aufweist, der den Strangprofilabschnitt (3) und eine zwischengelegte Dichtung teilweise übergreift.

7. Schwenk-Neigekopf nach Anspruch 1, **dadurch gekennzeichnet,** daß der senkrechte Profilschenkel (3b) das ersteLager für die Neigeachse (AN-AN) und mit einem Zwischenraum (13) eine Platine (14) trägt, in der sich das zweite Lager für die Neigeachse (AN-AN) befindet und auf deren dem Profilschenkel (3b) abgekehrten Seite ein Antriebsmotor (15) für die Neigebewegung befestigt ist, wobei in dem Zwischenraum (13) Getriebeteile eines Untersetzungsgetriebes (16) für die Neigeachse (AN-AN) angeordnet sind.

8. Schwenk-Neigekopf nach Anspruch 1, **dadurch gekennzeichnet,** daß der waagrechte Profilschenkel (3a) das erste Lager für die Schwenkachse (AS-AS) und mit einem Zwischenraum (9) eine Platine (10) trägt, in der sich das zweite Lager für die Schwenkachse AS-AS befindet und auf deren dem Profilschenkel (3a) abgekehrten Seite ein Antriebsmotor (11) für die Schwenkbewegung befestigt ist, wobei in dem Zwischenraum (9) Getriebeteile eines Untersetzungsgetriebes (12) für die Schwenkachse (AS-AS) angeordnet sind.

9. Schwenk-Neigekopf nach Anspruch 1, **dadurch gekennzeichnet,** daß der Deckel (26) in Bezug auf eine seiner Achsen spiegelsymmetrisch ausgebildet ist.

## Claims

1. Pivotal tilthead (1) for optical appliances (19), in particular for surveillance cameras, comprising a housing (2, 2a) with a housing mounting socket (4) to be attached on a horizontal plane, with control elements (7, 8) for pivoting the appliances around a first perpendicular pivotal axis (AS - AS), which interconnects the housing and the mounting socket, and for tilting around a second horizontal tilt axis (AN-AN), which connects the housing to a carrier (18, 27), and that the housing has a tubular extrusion profile section (3) which is sealed at both ends by a respective cover (22, 23, 26), **characterized in that**
a) the extrusion profile section (3) is mounted with a horizontal longitudinal profile axis (AP - AP), comprising perpendicular end surfaces (S) and a horizontal (3a) and at least one perpendicular profile shank (3b, 3d), which are peripherally complemented by additional wall sections (3c) of the extrusion profile section to a tubular hollow body;
b) the perpendicular pivot axis (AS - AS) passes through the horizontal profile shank (3a) and is supported against the latter;
c) the horizontal pivot axis (AN - AN) passes through the perpendicular profile shank (3b) and is supported against the latter; and
d) both covers (22, 23, 26) are mounted with perpendicular sealing surfaces (22a, 23a) on the end surfaces (3) of the extrusion profile section (3), and enclose the control elements (7, 8) between themselves and the extrusion profile section (3) .

2. Pivotal tilthead according to Claim 1, **characterized in that** the extrusion profile section (3) is made of a light-metal alloy.

3. Pivotal tilthead according to Claim 1, **characterized in that** the cover (22, 23) is made of a plastic material, preferably a fibre-reinforced moulded plastic material.

4. Pivotal tilthead according to Claim 1, **characterized in that** at least one of the covers (22, 23) on both sides has a cover wall (22b, 23b) which protrudes in the direction of the longitudinal profile axis (AP - AP) over the sealing surface (22a, 23a) of the cover.

5. Pivotal tilthead according to Claim 4, **characterized in that** the cover wall (22b, 23b) is bulged.

6. Pivotal tilthead according to Claim 3, **characterized in that** the cover (22, 23) comprises an edge (22c, 23c), which is offset from its sealing surface (22a, 23a) and which reaches partially over the extrusion profile section (3) and a seal thereinbetween.

7. Pivotal tilthead according to Claim 1, **characterized in that** the perpendicular profile shank (3b) carries the first mounting for the tilt axis (AN - AN) and with a gap (13) a plate bar (14) with the second mounting for the tilt axis (AN - AN) therein, and on its side facing away from the profile shank (3b) is mounted a drive motor (15) for the tilt movement, and the intermediate space (13) contains gearing elements of a reduction gearing (16) for the tilt axis (AN - AN).

8. Pivotal tilthead according to Claim 1, **characterized in that** the horizontal profile shank (3a) carries the first mounting for the pivot axis (AS - AS) and with a gap (9) a plate bar (10) which contains the second mounting for the pivot axis (AS - AS), and on its side facing away from the profile shank (3a) is mounted a drive motor (11) for the pivot movement, and gearing elements of a reduction gearing (12) for the pivot axis (AS - AS) are mounted in the intermediate space (9).

9. Pivotal tilthead according to Claim 1, **characterized in that** the cover (26) is mirror-symmetrical relative to one of its axes.

## Revendications

1. Tête pivotante et inclinable (1) pour appareils optiques (19), en particulier pour caméras de surveillance, comportant un boîtier (2, 2a) avec un socle de montage (4), pouvant se fixer sur un plan horizontal, pour le boîtier, des éléments réglants (7, 8), pour le pivotement des appareils autour d'un premier axe de pivotement vertical (AS-AS) qui relie l'un à l'autre le boîtier et le socle de montage, et pour l'inclinaison autour d'un second axe d'inclinaison horizontal (AN-AN) qui relie le boîtier à un support (18, 27), le boîtier possédant un tronçon de profilé extrudé (3) de forme tubulaire qui, à chacune des deux extrémités, est obturé par un couvercle (22, 23, 26), caractérisée par le fait que
a) le tronçon de profilé extrudé (3) est monté avec l'axe longitudinal (AP-AP) du profilé horizontal, présente des surfaces frontales (S) placées verticalement et une face (3a) du profilé horizontale et au moins une face (3b, 3d) du profilé verticale qui, sur la périphérie, sont complétées par d'autres parties de paroi (3c) du tronçon de profilé extrudé pour donner un corps creux de forme tubulaire,
b) l'axe de pivotement vertical (AS-AS) traverse la face horizontale (3a) du profilé et s'appuie sur celle-ci,
c) l'axe d'inclinaison horizontal (AN-AN) traverse la face verticale (3b) du profilé et s'appuie sur celle-ci, et que
d) les deux couvercles (22, 23, 26) sont, par leurs surfaces d'étanchéité verticales (22a, 23a), fixés sur les surfaces frontales (3) du tronçon de profilé extrudé (3) et enclosent les éléments réglants (7, 8) entre eux et le tronçon de profilé extrudé (3).

2. Tête pivotante et inclinable selon la revendication 1, caractérisée par le fait que le tronçon de profilé extrudé (3) est constitué d'un alliage de métal léger.

3. Tête pivotante et inclinable selon la revendication 1, caractérisée par le fait que le couvercle (22, 23) est constitué d'un plastique, de préférence d'un plastique injecté, armé de fibres.

4. Tête pivotante et inclinable selon la revendication 1, caractérisée par le fait qu'au moins l'un des couvercles (22, 23) situés des deux côtés présente une paroi de couvercle (22b, 23b) qui, selon la direction de l'axe longitudinal (AP-AP) du profilé, déborde au-delà de la surface d'étanchéité (22a, 23a) du couvercle.

5. Tête pivotante et inclinable selon la revendication 4, caractérisée par le fait que la paroi (22b, 23b) du couvercle est bombée.

6. Tête pivotante et inclinable selon la revendication 3, caractérisée par le fait que le couvercle (22, 23) présente une bordure (22c, 23c) qui est décalée de sa surface d'étanchéité (22a, 23a) et qui, par-dessus, vient partiellement en prise avec le tronçon de profilé extrudé (3) et avec une garniture d'étanchéité intermédiaire.

7. Tête pivotante et inclinable selon la revendication 1, caractérisée par le fait que la face verticale (3b) du profilé extrudé porte le premier palier pour l'axe d'inclinaison (AN-AN) et, avec un espace intermédiaire (13), une platine sur laquelle se trouve le second palier pour l'axe d'inclinaison (AN-AN) et sur le côté, opposé à la face (3b) du profilé, de laquelle est fixé un moteur d'entraînement (15) pour le mouvement d'inclinaison, des pièces d'un mécanisme de réduction (16) pour l'axe d'inclinaison (AN-AN) étant disposées dans l'espace intermédiaire (13).

8. Tête pivotante et inclinable selon la revendication 1, caractérisée par le fait que la face horizontale (3a) du profilé porte le premier palier pour l'axe de pivotement (AS-AS) et, avec un espace intermédiaire (9), une platine sur laquelle se trouve le second palier pour l'axe de pivotement (AS-AS) et sur le côté, opposé à la face (3a) du profilé, de laquelle est fixé un moteur d'entraînement (11) pour le mouvement de pivotement, des pièces d'un mécanisme de réduction (12) pour l'axe de pivotement (AS-AS) étant disposées dans l'espace intermédiaire (9).

9. Tête pivotante et inclinable selon la revendication 1, caractérisée par le fait que le couvercle (26) est conçu symétrique par rapport à l'un de ses axes.
